# FASCICULE DE BREVET EUROPEEN

(11) **EP 4 072 904 B1**
(45) Date de publication et mention de la délivrance du brevet: **20.08.2025**
(21) Numéro de dépôt: 20820142.6
(22) Date de dépôt: 08.12.2020
(51) Int. Cl.: B60R 13/04

(54) **PANNEAU DE CARROSSERIE DE VÉHICULE AUTOMOBILE COMPRENANT UNE PARTIE TRANSPARENTE**
KRAFTFAHRZEUGKAROSSERIEPLATTE MIT EINEM TRANSPARENTEN TEIL
MOTOR VEHICLE BODYWORK PANEL COMPRISING A TRANSPARENT PORTION

(30) Priorité: 09.12.2019 FR 1913985
(43) Date de publication de la demande: 19.10.2022
(73) Titulaire: OPmobility SE, 69007 Lyon (FR)
(72) Inventeur: BOISSON, Damien, 01150 SAINTE-JULIE (FR); BERGERON-VANHILLE, Aurélie, 01150 SAINTE-JULIE (FR); MOISAN, Laura, 01150 SAINTE-JULIE (FR); DUBOST, Elise, 01150 SAINTE-JULIE (FR); LEROY, Pallas, 01150 SAINTE-JULIE (FR)
(74) Mandataire: LLR
(86) Numéro de dépôt international: PCT/EP2020/084988
(87) Numéro de publication internationale: WO 2021/116061

(56) Documents cités:
- EP-A1- 1 650 053
- EP-A1- 1 707 988
- EP-A2- 1 344 688
- WO-A1-2019/043202
- DE-A1- 102009 017 363
- DE-A1- 102011 112 835
- FR-A1- 3 004 399
- FR-A1- 3 074 129
- US-A1- 2017 139 506
- US-A1- 2017 352 938
- US-A1- 2018 029 264

## Description

L'invention concerne les panneaux de carrosserie de véhicule automobile et plus particulièrement les peaux de pare-chocs.

Les panneaux de carrosserie peuvent comprendre une partie transparente visible depuis l'extérieur du véhicule sur lequel les panneaux sont montés. Par exemple, une peau de pare-chocs peut comprendre, au niveau d'une zone comprenant un emblème un véhicule, une portion comprenant une paroi transparente à la lumière visible. Il pourrait également s'agir d'une zone d'un panneau de carrosserie formant un radôme. On entend par « transparent à la lumière visible » qu'elle est au moins transparente à tout rayonnement lumineux présentant une longueur d'onde comprise dans le spectre visible, c'est-à-dire comprise entre environ 380 et 780 nm. L'utilisation d'une paroi transparente permet par exemple d'obtenir un rendu visuel de bonne qualité.

Cependant, la paroi transparente, visible depuis l'extérieur du véhicule, peut être exposée aux conditions climatiques et se détériorer, ce qui pose un problème substantiel pour une pièce à visée au moins en partie esthétique. Par exemple, certaines matières thermoplastiques disponibles jaunissent par oxydation thermique, c'est-à-dire en contact avec l'oxygène et en présence de chaleur, par exemple celle du Soleil. C'est notamment le cas de certains polyamides et du polychlorure de vinyle. Il est alors nécessaire d'utiliser des matières plastiques particulières n'étant pas sujettes à ce phénomène, ce qui réduit les choix de matériaux et peut engendrer des surcoûts de production des panneaux de carrosserie en devant concevoir une paroi transparente avec une matière plastique ayant une formulation particulière.

Ces dégradations conduisent non seulement à une potentielle perte du rendu esthétique recherché mais peuvent de plus donner au panneau de carrosserie un aspect non acceptable à long terme. Le document US 2017/352938 A1 divulgue un panneau de carrosserie correspondant au préambule de la revendication 1.

L'invention a notamment pour but de fournir un panneau de carrosserie du type de ceux précités ayant un rendu esthétique optimal et durable au cours de la vie du véhicule sur lequel il est monté.

A cet effet, l'invention a pour objet un panneau de carrosserie de véhicule automobile comprenant :
- un corps principal,
- une paroi réalisée en matière plastique transparente à la lumière visible comprenant une face destinée à être visible depuis l'extérieur du véhicule, et
- un revêtement transparent à la lumière visible recouvrant au moins la face de la paroi transparente à la lumière visible destinée à être visible depuis l'extérieur du véhicule, la paroi étant encapsulée de manière étanche entre le corps principal et le revêtement.

Ainsi, on obtient un panneau de carrosserie de véhicule automobile comprenant une paroi extérieure transparente à la lumière visible qui n'est pas en contact avec l'oxygène, ce qui évite une oxydation thermique conduisant au jaunissement de certaines matières plastiques. Cela permet de conserver l'esthétisme du panneau de carrosserie et ce quelle que soit la matière plastique utilisée pour former la paroi transparente à la lumière visible (on peut dès lors utiliser des matières plastiques utilisées fréquemment pour concevoir des panneaux de carrosserie sans avoir à modifier leur formulation, notamment les polyamides). La présence d'un revêtement externe permet quant à elle de protéger la paroi transparente des rayures et des rayons ultraviolets, mais également d'intégrer par exemple un film décoratif ou encore des fils dégivrants. Cela peut permettre de protéger la paroi transparente (protection contre les rayures et les rayons ultraviolets), de changer le rendu esthétique du panneau de carrosserie (intégration d'un film décoratif) ou encore d'intégrer des options sur le véhicule (présence de fils dégivrants).

Le panneau de carrosserie selon l'invention peut en outre comprendre au moins une des caractéristiques suivantes :
- la paroi transparente à la lumière visible est réalisée en polyamide et le revêtement transparent à la lumière visible est un film réalisé en polyuréthane,
- l'épaisseur du revêtement transparent à la lumière visible est comprise entre 0,5 millimètre et 3 millimètres,
- au moins un élément décoratif est positionné entre la paroi transparente à la lumière visible et le corps principal ou entre la paroi transparente à la lumière visible et le revêtement transparent à la lumière visible,
- au moins un moyen de dégivrage du panneau de carrosserie est positionné entre la paroi transparente à la lumière visible et le corps principal ou entre la paroi transparente à la lumière visible et le revêtement transparent à la lumière visible,
- au moins un dispositif d'émission de lumière visible est positionné entre la paroi transparente à la lumière visible et le corps principal ou entre la paroi transparente à la lumière visible et le revêtement transparent à la lumière visible.

Selon l'invention le corps principal recouvre l'ensemble des faces de la paroi transparente à la lumière visible à l'exception de la face recouverte par le revêtement transparent à la lumière visible.

En option, - le panneau de carrosserie forme une peau de pare-chocs, et
- le panneau de carrosserie forme au moins un partie un radôme.

L'invention a également pour objet un procédé de fabrication d'un panneau de carrosserie de véhicule automobile selon l'une quelconque des revendications 1 - 8 dans lequel on encapsule de manière étanche par moulage une paroi réalisée en matière plastique transparente à la lumière visible entre un revêtement transparent à la lumière visible et un corps principal du panneau de carrosserie.

Ainsi, on obtient un panneau de carrosserie dont une partie potentiellement sensible à la dégradation, par exemple par oxydation thermique, est protégée de cette dernière.

Le procédé selon l'invention peut en outre comprendre au moins une des caractéristiques suivantes :
- le procédé de fabrication comprend les étapes suivantes :
   - on applique le revêtement transparent à la lumière visible dans un moule, de préférence par pulvérisation,
   - on moule la paroi transparente à la lumière visible sur le revêtement, et
   - on encapsule de manière étanche la paroi transparente à la lumière visible entre le revêtement transparent à la lumière visible et le corps principal du panneau de carrosserie,
- le procédé de fabrication comprend les étapes suivantes :
   - on moule la paroi transparente à la lumière visible,
   - on surmoule le revêtement transparent à la lumière visible sur au moins une face de la paroi transparente à la lumière visible destinée à être visible depuis l'extérieur d'un véhicule, et
   - on encapsule de manière étanche la paroi transparente à la lumière visible entre le revêtement transparent à la lumière visible et le corps principal du panneau de carrosserie,
- on place entre le corps principal et la paroi transparente à la lumière visible au moins un élément décoratif, au moins un moyen de dégivrage du panneau de carrosserie et/ou au moins un dispositif d'émission de lumière visible,
- on place entre le revêtement transparent à la lumière visible et la paroi transparente à la lumière visible au moins un élément décoratif, au moins un moyen de dégivrage du panneau de carrosserie et/ou au moins un dispositif d'émission de lumière visible, et
- la paroi transparente à la lumière visible est réalisée en polyamide et le revêtement transparent à la lumière visible est un film réalisé en polyuréthane dont l'épaisseur est de préférence comprise entre 0,5 millimètre et 3 millimètres.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue éclatée d'une portion d'un panneau de carrosserie selon l'invention, et
[Fig. 2] la figure 2 est une vue en coupe d'une portion d'un panneau de carrosserie selon l'invention.

### Description détaillée

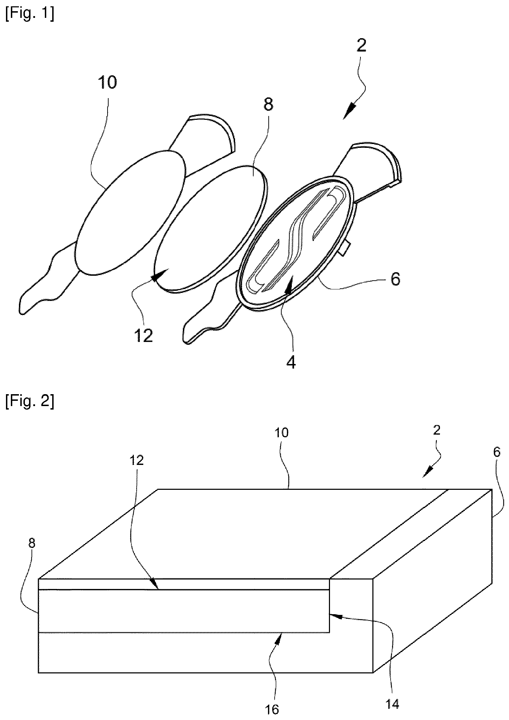

On se réfère désormais à la figure 1 illustrant de manière éclatée une portion 2 d'un panneau de carrosserie selon l'invention. Il peut s'agir par exemple d'un panneau de carrosserie de type peau de pare-chocs, cette portion 2 pouvant dès lors correspondre à une zone comprenant un emblème du véhicule automobile. On peut par exemple noter la présence d'un élément décoratif 4 (pouvant avoir la forme d'un feuillet décoratif ou encore être peint). Bien entendu, la portion 2 peut également être mise en place au niveau d'un panneau de carrosserie autre qu'un pare-chocs.

Dans ce qui va suivre, nous allons décrire la portion 2 du panneau de carrosserie. Bien entendu, tout ce qui est décrit pour la portion 2 (éléments la constituant, procédé de fabrication) est également applicable au panneau de carrosserie pris dans son intégralité.

La portion 2 du panneau de carrosserie comprend un corps principal 6. Ce dernier peut être réalisé de manière classique dans un matériau thermoplastique du type de ceux utilisés pour fabriquer un panneau de carrosserie en matière thermoplastique. Le corps principal peut également, comme cela est représenté sur les figures 1 et 2, être opaque à la lumière visible. On entend par « opaque à la lumière visible » qu'un matériau ne laisse pas passer tout rayonnement lumineux présentant une longueur d'onde comprise dans le spectre visible, c'est-à-dire comprise entre environ 380 et 780 nm. La couleur du corps principal 6 peut quant à elle varier.

La portion 2 comprend également une paroi 8 réalisée en matière plastique transparente à la lumière visible comprenant une face 12 destinée à être visible depuis l'extérieur du véhicule. Cette paroi 8 est fixée sur une face du corps principal 6, plus précisément la face visible depuis l'extérieur d'un véhicule automobile sur lequel la portion 2 est présente.

La paroi 8 peut être réalisée en polyamide ou encore en polychlorure de vinyle. Comme expliqué plus haut, ces matériaux ont tendance à se dégrader (jaunissement) par oxydation thermique, c'est-à-dire au contact de l'oxygène (par exemple celui de l'air ambiant) et en présence de chaleur (par exemple celle du Soleil).

Pour éviter cela, un revêtement 10 transparent à la lumière visible (selon la définition donnée plus haut) est placé contre la paroi 8 de manière à recouvrir recouvrant au moins la face 12 de la paroi transparente à la lumière visible destinée à être visible depuis l'extérieur du véhicule, la paroi 8 étant encapsulée de manière étanche entre le corps principal 6 et le revêtement 10 transparent à la lumière visible.

En d'autres termes, la paroi 8 ne peut pas être en contact avec de l'oxygène. De ce fait, et même en cas d'augmentation de la température de la paroi, aucun jaunissement de la paroi 8 n'est observé car aucune oxydation thermique ne peut avoir lieu.

Dans les exemples représentés, le corps principal 6 et le revêtement 10 sont dimensionnés de manière à encapsuler de manière étanche la paroi 8 à eux deux. Aucun autre élément n'est nécessaire pour encapsuler la paroi 8. On observe par exemple sur la figure 2 que la face 12 de la paroi 8 est recouverte par le revêtement 10, l'ensemble des autres faces, dont la face 16 et la face 14, étant recouvertes par le corps principal 6 (recouvrant donc l'ensemble des faces de la paroi 8 à l'exception de la face 12 recouverte par le revêtement 10).

Alternativement, il serait possible de rapporter au moins un autre élément pour encapsuler cette dernière. Par exemple, le corps principal 6 et le revêtement 10 pourrait recouvrir chacun une face de la paroi, par exemple les faces opposées 12 et 16. Les autres faces (dont la face 14) seraient dès lors recouvertes par un ou plusieurs autres éléments assurant l'étanchéité de la structure finale.

Le revêtement 10 peut être réalisé dans un matériau thermoplastique. Par exemple, il peut être réalisé en polyuréthane. Il est d'ailleurs avantageux d'utiliser un revêtement 10 en polyuréthane en combinaison avec une paroi 8 en polyamide du fait des bonnes propriétés d'adhésion entre les deux matériaux. Plus particulièrement, et notamment en cas de réalisation de la pièce par un procédé de dépôt du revêtement dans le moule (ou procédé « *In Mold Coating »* ou « *IMC »* en anglais »), on utilise un mélange entre une résine et un durcisseur en polyuréthane.

Dans le cas de l'utilisation d'un revêtement 10 en polyuréthane (pouvant avoir la forme d'un film), il est avantageux que l'épaisseur de ce dernier soit comprise entre 0,5 et 3 millimètres. En effet, cette gamme d'épaisseur est intéressante car :
- le revêtement 10 protège la paroi 8 des rayonnements ultraviolets,
- le revêtement 10 protège la paroi 8 des rayures. Il est même possible de faire disparaître des rayures en chauffant localement le revêtement 10, et
- un effet de profondeur est obtenu au niveau de la portion 2, notamment si cette dernière a des visées esthétiques.

Comme expliqué auparavant, il est possible qu'un élément décoratif 4 soit placé entre le corps principal 6 et la paroi 8 au niveau de la paroi 16. Il pourrait également être placé entre la paroi 8 et le revêtement 10 au niveau de la paroi 12. La paroi 8 et le revêtement 10 étant transparents à la lumière visible, l'élément décoratif 4 est visible depuis l'extérieur d'un véhicule automobile sur lequel la portion 2 est placée (on note ici que, dans les zones ne comprenant pas l'élément décoratif 4, le corps principal 6 est visible du fait de la transparence à la lumière visible de la paroi 8 et du revêtement 10).

Il est également possible d'introduire au moins un dispositif d'émission de lumière visible entre le corps principal 6 et l'élément décoratif 4 (ici opaque à la lumière visible) pour obtenir un rétroéclairage de la zone. De tels dispositifs, par exemple des LEDs ou encore guide lumière (par exemple des fibres optiques diffusant de la lumière émise par des LEDS), sont connus de l'homme du métier.

De la même manière, il est possible de placer au moins un moyen de dégivrage du panneau de carrosserie entre la paroi 8 et le corps principal 6 ou entre la paroi 8 et le revêtement 10. Cela est d'autant plus pertinent si la zone est traversée par des ondes émises par des organes d'émission d'ondes de type capteurs de distance afin d'éviter la perturbation de la propagation des ondes par une couche de givre. Les moyens de dégivrage sont choisis en fonction de l'organe d'émission d'ondes, par exemple des fils métalliques pour des radars de type ACC pouvant émettre entre 75 et 81 GHz. De tels moyens sont connus de l'homme du métier.

L'invention concerne également un procédé de fabrication d'un panneau de carrosserie de véhicule automobile du type de celui de l'invention.

Selon ce procédé, on encapsule de manière étanche par moulage une paroi (la paroi 8) réalisée en matière plastique transparente à la lumière visible entre un revêtement (le revêtement 10) transparent à la lumière visible et un corps principal (le corps principal 6) du panneau de carrosserie (ou la portion 2). Ainsi, la paroi 8 ne peut être en contact avec l'oxygène de l'air ambiant.

Dans le cas d'un moulage par un procédé In Mold Coating, la température de moulage est d'environ 90°C, la pression de moulage est quant à elle environ égale à 20 bars.

Selon un premier mode de réalisation du procédé, correspondant à un procédé In Mold Coating :
- on applique le revêtement 10 transparent à la lumière visible dans un moule, de préférence par pulvérisation. Ainsi, le fond de l'empreinte du moule est tapissé de matière destinée à former le revêtement 10 ;
- on moule la paroi 8 transparente à la lumière visible sur le revêtement, par exemple par injection dans le cadre de l'utilisation d'un matériau thermoplastique ;
- on encapsule de manière étanche la paroi 8 transparente à la lumière visible entre le revêtement 10 transparent à la lumière visible et le corps principal 6 du panneau de carrosserie.

Selon un second mode de réalisation du procédé, correspondant également à un procédé In Mold Coating :
- on moule la paroi 8 transparente à la lumière visible, par exemple par injection dans le cadre de l'utilisation d'un matériau thermoplastique ;
- on surmoule le revêtement 10 transparent à la lumière visible sur au moins une face (par exemple la face 12) de la paroi 8 transparente à la lumière visible destinée à être visible depuis l'extérieur d'un véhicule, et
- on encapsule de manière étanche la paroi 8 transparente à la lumière visible entre le revêtement 10 transparent à la lumière visible et le corps principal 6 du panneau de carrosserie.

En ce qui concerne l'encapsulation de la paroi 8, celle peut se faire par surmoulage du corps principal 6 sur l'ensemble paroi 8/revêtement 10 ou en rapportant le corps principal 6 moulé au préalable sur cet ensemble.

Avantageusement, on peut placer entre le corps principal 6 et la paroi 8 transparente à la lumière visible au moins un élément décoratif, au moins un moyen de dégivrage du panneau de carrosserie et/ou au moins un dispositif d'émission de lumière visible. Ces éléments permettront d'obtenir les effets décrits plus haut.

Alternativement, ces éléments peuvent être placés entre le revêtement 10 transparent à la lumière visible et la paroi 8 transparente à la lumière visible.

Les différents placements évoqués ont lieu avant l'étape visant à lier les deux parties entre lesquelles ils sont disposés. Par exemple, et en cas de placement d'un élément décoratif 4 entre le corps principal 6 et la paroi 8, cet élément décoratif 4 est placé avant d'encapsuler le corps principal 6 sur l'ensemble paroi 8/revêtement 10.

L'invention n'est pas limitée aux modes de réalisation présentés et d'autres modes de réalisation apparaîtront clairement à l'homme du métier.

### Références numériques

2 : portion de panneau de carrosserie
4 : élément décoratif
6 : corps principal
8 : paroi transparente à la lumière visible
10 : revêtement transparent à la lumière visible
12, 14, 16 : faces de la paroi transparente à la lumière visible

## Revendications

1. Panneau de carrosserie de véhicule automobile comprenant :
- un corps principal (6),
- une paroi (8) réalisée en matière plastique transparente à la lumière visible comprenant une face (12) destinée à être visible depuis l'extérieur du véhicule, et
- un revêtement (10) transparent à la lumière visible recouvrant au moins la face (12) de la paroi (8) transparente à la lumière visible destinée à être visible depuis l'extérieur du véhicule,
la paroi (8) étant encapsulée de manière étanche entre le corps principal (6) et le revêtement (10) transparent à la lumière visible,
**caractérisé en ce que** le corps principal (6) recouvre l'ensemble des faces (14, 16) de la paroi (8) transparente à la lumière visible à l'exception de la face (12) recouverte par le revêtement (10) transparent à la lumière visible.

2. Panneau de carrosserie selon la revendication 1, dans lequel la paroi (8) transparente à la lumière visible est réalisée en polyamide et le revêtement (10) transparent à la lumière visible est un film réalisé en polyuréthane.

3. Panneau de carrosserie selon l'une quelconque des revendications précédentes, dans lequel l'épaisseur du revêtement (10) transparent à la lumière visible est comprise entre 0,5 millimètre et 3 millimètres.

4. Panneau de carrosserie selon l'une quelconque des revendications précédentes, dans lequel au moins un élément décoratif (4) est positionné entre la paroi (8) transparente à la lumière visible et le corps principal (6) ou entre la paroi (8) transparente à la lumière visible et le revêtement (10) transparent à la lumière visible.

5. Panneau de carrosserie selon l'une quelconque des revendications précédentes, dans lequel au moins un moyen de dégivrage du panneau de carrosserie est positionné entre la paroi (8) transparente à la lumière visible et le corps principal (6) ou entre la paroi (8) transparente à la lumière visible et le revêtement (10) transparent à la lumière visible.

6. Panneau de carrosserie selon l'une quelconque des revendications précédentes, dans lequel au moins un dispositif d'émission de lumière visible est positionné entre la paroi (8) transparente à la lumière visible et le corps principal (6) ou entre la paroi (8) transparente à la lumière visible et le revêtement (10) transparent à la lumière visible.

7. Panneau de carrosserie selon l'une quelconque des revendications précédentes, le panneau de carrosserie formant une peau de pare-chocs.

8. Panneau de carrosserie selon l'une quelconque des revendications précédentes, le panneau de carrosserie formant au moins en partie un radôme.

9. Procédé de fabrication du panneau de carrosserie de véhicule automobile selon l'une quelconque des revendications précédentes, **caractérisé en ce qu'**on encapsule de manière étanche par moulage une paroi (8) réalisée en matière plastique transparente à la lumière visible entre un revêtement (10) transparent à la lumière visible et un corps principal (6) du panneau de carrosserie.

10. Procédé de fabrication selon la revendication 9 comprenant les étapes suivantes :
- on applique le revêtement (10) transparent à la lumière visible dans un moule, de préférence par pulvérisation,
- on moule la paroi (8) transparente à la lumière visible sur le revêtement, et
- on encapsule de manière étanche la paroi (8) transparente à la lumière visible entre le revêtement (10) transparent à la lumière visible et le corps principal (6) du panneau de carrosserie.

11. Procédé de fabrication selon la revendication 9 comprenant les étapes suivantes :
- on moule la paroi (8) transparente à la lumière visible,
- on surmoule le revêtement (10) transparent à la lumière visible sur au moins une face (12) de la paroi (8) transparente à la lumière visible destinée à être visible depuis l'extérieur d'un véhicule, et
- on encapsule de manière étanche la paroi (8) transparente à la lumière visible entre le revêtement (10) transparent à la lumière visible et le corps principal (6) du panneau de carrosserie.

12. Procédé de fabrication selon l'une quelconque des revendications 9 à 11, dans lequel on place entre le corps principal (6) et la paroi (8) transparente à la lumière visible au moins un élément décoratif (4), au moins un moyen de dégivrage du panneau de carrosserie et/ou au moins un dispositif d'émission de lumière visible.

13. Procédé de fabrication selon l'une quelconque des revendications 9 à 12, dans lequel on place entre le revêtement (10) transparent à la lumière visible et la paroi (8) transparente à la lumière visible au moins un élément décoratif, au moins un moyen de dégivrage du panneau de carrosserie et/ou au moins un dispositif d'émission de lumière visible.

14. Procédé de fabrication selon l'une quelconque des revendications 9 à 13, dans lequel la paroi (8) transparente à la lumière visible est réalisée en polyamide et le revêtement (10) transparent à la lumière visible est un film réalisé en polyuréthane dont l'épaisseur est de préférence comprise entre 0,5 millimètre et 3 millimètres.

## Patentansprüche

1. Karosseriepaneel eines Kraftfahrzeugs, aufweisend:
- einen Hauptkörper (6),
- eine Wand (8) aus einem für sichtbares Licht transparenten Kunststoffmaterial mit einer Seite (12), die dazu bestimmt ist, von der Außenseite des Fahrzeugs aus sichtbar zu sein, und
- eine für sichtbares Licht transparente Beschichtung (10), die zumindest die Seite (12) der für sichtbares Licht transparenten Wand (8) bedeckt, die dazu bestimmt ist, von außerhalb des Fahrzeugs sichtbar zu sein,
wobei die Wand (8) zwischen dem Hauptkörper (6) und der für sichtbares Licht transparenten Beschichtung (10) dicht eingekapselt ist,
**dadurch gekennzeichnet, dass** der Hauptkörper (6) alle Seite (14, 16) der für sichtbares Licht transparenten Wand (8) mit Ausnahme der Seite (12) bedeckt, die von der für sichtbares Licht transparenten Beschichtung (10) bedeckt ist.

2. Karosseriepaneel nach Anspruch 1, wobei die für sichtbares Licht transparente Wand (8) aus Polyamid hergestellt ist und die für sichtbares Licht transparente Beschichtung (10) eine aus Polyurethan hergestellte Folie ist.

3. Karosseriepaneel nach einem der vorhergehenden Ansprüche, wobei die Dicke der für sichtbares Licht transparenten Beschichtung (10) zwischen 0,5 Millimeter und 3 Millimeter beträgt.

4. Karosseriepaneel nach einem der vorhergehenden Ansprüche, wobei mindestens ein dekoratives Element (4) zwischen der für sichtbares Licht transparenten Wand (8) und dem Hauptkörper (6) oder zwischen der für sichtbares Licht transparenten Wand (8) und der für sichtbares Licht transparenten Beschichtung (10) positioniert ist.

5. Karosseriepaneel nach einem der vorhergehenden Ansprüche, wobei mindestens ein Mittel zum Enteisen des Karosseriepaneels zwischen der für sichtbares Licht transparenten Wand (8) und dem Hauptkörper (6) oder zwischen der für sichtbares Licht transparenten Wand (8) und der für sichtbares Licht transparenten Verkleidung (10) positioniert ist.

6. Karosseriepaneel nach einem der vorhergehenden Ansprüche, wobei mindestens eine Vorrichtung zur Emission von sichtbarem Licht zwischen der für sichtbares Licht transparenten Wand (8) und dem Hauptkörper (6) oder zwischen der für sichtbares Licht transparenten Wand (8) und der für sichtbares Licht transparenten Beschichtung (10) positioniert ist.

7. Karosseriepaneel nach einem der vorhergehenden Ansprüche, wobei das Karosseriepaneel eine Stoßstangenhaut bildet.

8. Karosseriepaneel nach einem der vorhergehenden Ansprüche, wobei das Karosseriepaneel zumindest teilweise ein Radom bildet.

9. Verfahren zur Herstellung des Kraftfahrzeug-Karosseriepaneels nach einem der vorhergehenden Ansprüche, **dadurch gekennzeichnet, dass** eine aus einem für sichtbares Licht transparenten Kunststoffmaterial hergestellte Wand (8) zwischen einer für sichtbares Licht transparenten Beschichtung (10) und einem Hauptkörper (6) des Karosseriepaneels durch Formen dicht eingekapselt wird.

10. Herstellungsverfahren nach Anspruch 9 mit den folgenden Schritten:
- Aufbringen der für sichtbares Licht transparenten Beschichtung (10) in einer Form, vorzugsweise durch Sprühen,
- Formen der für sichtbares Licht transparenten Wand (8) über der Beschichtung, und
- dichtes Einkapseln der für sichtbares Licht transparenten Wand (8) zwischen der für sichtbares Licht transparenten Beschichtung (10) und dem Hauptkörper (6) des Karosseriepaneels.

11. Herstellungsverfahren nach Anspruch 9 mit den folgenden Schritten:
- Formen der für sichtbares Licht transparenten Wand (8),
- Überformen der für sichtbares Licht transparenten Beschichtung (10) auf mindestens einer Seite (12) der für sichtbares Licht transparenten Wand (8), die dazu bestimmt ist, von der Außenseite eines Fahrzeugs aus sichtbar zu sein, und
- dichtes Einkapseln der für sichtbares Licht transparenten Wand (8) zwischen der für sichtbares Licht transparenten Beschichtung (10) und dem Hauptkörper (6) des Karosseriepaneels.

12. Herstellungsverfahren nach einem der Ansprüche 9 bis 11, wobei zwischen dem Hauptkörper (6) und der für sichtbares Licht transparenten Wand (8) mindestens ein dekoratives Element (4), mindestens ein Mittel zum Enteisen des Karosseriepaneels und/oder mindestens eine Vorrichtung zum Emittieren von sichtbarem Licht angeordnet wird.

13. Herstellungsverfahren nach einem der Ansprüche 9 bis 12, wobei zwischen der für sichtbares Licht transparenten Beschichtung (10) und der für sichtbares Licht transparenten Wand (8) mindestens ein dekoratives Element, mindestens ein Mittel zur Enteisung des Karosseriepaneels und/oder mindestens eine Vorrichtung zur Emission von sichtbarem Licht angeordnet wird.

14. Herstellungsverfahren nach einem der Ansprüche 9 bis 13, wobei die für sichtbares Licht transparente Wand (8) aus Polyamid hergestellt ist und die für sichtbares Licht transparente Beschichtung (10) eine aus Polyurethan hergestellte Folie ist, deren Dicke vorzugsweise zwischen 0,5 Millimetern und 3 Millimetern liegt.

## Claims

1. Motor vehicle bodywork panel, comprising:
- a main body (6),
- a wall (8) made of plastic material that is transparent to visible light, comprising a face (12) intended to be visible from the outside of the vehicle, and
- a coating (10) that is transparent to visible light covering at least the face (12) of the wall (8) that is transparent to visible light intended to be visible from the outside of the vehicle,
the wall (8) being encapsulated in a sealed manner between the main body (6) and the coating (10) that is transparent to visible light,
**characterized in that** the main body (6) covers all the faces (14, 16) of the wall (8) transparent to visible light with the exception of the face (12) covered by the coating (10) transparent to visible light.

2. Bodywork panel according to claim 1, wherein the wall (8) transparent to visible light is made of polyamide and the coating (10) transparent to visible light is a film made of polyurethane.

3. Bodywork panel according to one of the preceding claims, wherein the thickness of the coating (10) transparent to visible light is between 0.5 millimeters and 3 millimeters.

4. Bodywork panel according to one of the preceding claims, wherein at least one decorative element (4) is positioned between the wall (8) transparent to visible light and the main body (6) or between the wall (8) transparent to visible light and the coating (10) transparent to visible light.

5. Bodywork panel according to one of the preceding claims, wherein at least one means for defrosting the bodywork panel is positioned between the wall (8) transparent to visible light and the main body (6) or between the wall (8) transparent to visible light and the coating (10) transparent to visible light.

6. Bodywork panel according to one of the preceding claims, wherein at least one visible light emitting device is positioned between the wall (8) transparent to visible light and the main body (6) or between the wall (8) transparent to visible light and the coating (10) transparent to visible light.

7. Bodywork panel according to one of the preceding claims, the bodywork panel forming a bumper skin.

8. Bodywork panel according to one of the preceding claims, the bodywork panel at least partially forming a radome.

9. Manufacturing method of the motor vehicle bodywork panel according to one of the preceding claims, **characterized in that** a wall (8) made of plastic material transparent to visible light is encapsulated in a sealed manner between a coating (10) transparent to visible light and a bodywork panel main body (6).

10. Manufacturing method according to claim 9, comprising the following steps:
- the coating (10) transparent to visible light is applied in a mold, preferably by spraying,
- the wall (8) transparent to visible light is molded on the coating, and
- the wall (8) transparent to visible light is encapsulated in a sealed manner between the coating (10) transparent to visible light and the main body (6) of the bodywork panel.

11. Manufacturing method according to claim 9, comprising the following steps:
- the wall (8) transparent to visible light is molded,
- the coating (10) transparent to visible light is overmolded on at least one face (12) of the wall (8) transparent to visible light intended to be visible from outside a vehicle, and
- the wall (8) transparent to visible light is encapsulated in a sealed manner between the coating (10) transparent to visible light and the main body (6) of the bodywork panel.

12. Manufacturing method according to one of claims 9 to 11, wherein at least one decorative element (4), at least one bodywork panel defrosting means and/or at least one visible light emitting device is placed between the main body (6) and the wall (8) transparent to visible light.

13. Manufacturing method according to one of claims 9 to 12, wherein at least one decorative element, at least one means for defrosting the bodywork panel and/or at least one device for emitting visible light is placed between the coating (10) transparent to visible light and the wall (8) transparent to visible light.

14. Manufacturing method according to one of claims 9 to 13, wherein the wall (8) transparent to visible light is made of polyamide and the coating (10) transparent to visible light is a film made of polyurethane, the thickness of which is preferably between 0.5 millimeters and 3 millimeters.
